# EUROPEAN PATENT APPLICATION

(11) **EP 2 863 190 A2**
(43) Date of publication of application: **22.04.2015**
(21) Application number: 14189729.8
(22) Date of filing: 21.10.2014
(51) Int. Cl.: G01H 9/00

(54) **Optical sensor module**

(30) Priority: 21.10.2013 US 201361893295 P; 20.10.2014 US 201414517942
(71) Applicant: Wu, Mao-Jen, Kaohsiung City 801 (TW)
(72) Inventor: Wu, Mao-Jen, Kaohsiung City 801 (TW); Chang, Chia-Chi, Taipei City 114 (TW); Wu, Mao-Jen, Kaohsiung City 801 (TW); Lin, Chi-Hsiang, Taoyuan County 325 (TW); Lin, Shu-Hsuan, New Taipei City 241 (TW)
(74) Representative: Zaboliene, Reda

(57) **Abstract**

An optical sensor module is proposed. The optical sensor module comprises two parts, including optical module and vibration sensing unit. The vibration sensing unit is disposed on the optical module. The optical module comprises a light source (105), a photo detector (107), and a second substrate (102) with optical micro-reflection surface. The vibration sensing unit comprises a first substrate (101), a membrane (103), and an optical gate (104). The membrane is disposed between the first substrate and the optical gate. The light source and the photo detector are disposed on the second substrate

## Description

### TECHNICAL FIELD

The present invention relates to an optical sensor, and more particularly, to an optical sensor module to measure vibration in an optical sensor system.

### BACKGROUND

Generally, optical sensors are to convert energy of light or electromagnetic waves into electric energy. Background-art optical sensors include photodiodes, avalanche photodiodes, phototransistors, photo-MOSs, CCD sensors and CMOS sensors having semiconductor as their main components, photomultiplier tubes using photoelectric effect, etc.

Of the former semiconductor optical sensors, some are to extract output signal as electric current by converting carriers into the external electric current directly, where the carriers are electron or positive holes generated by irradiation with light. Others are to extract output signal as a modulation of majority electric-current, where the modulation is formed by a local electric field by the photo-generated carriers accumulated in a predetermined local place.

Recently, the use of optical sensors has become more prevalent for sensing applications, particularly in those applications where the sensors must be placed in harsh environments, which seriously affects the performance/reliability of the associated electronics. Fiber optic sensors have an advantage in that they require no electronics at or near the sensor. In fiber optic sensors, light is sent through the optical fiber from a remote location.

Fiber optic sensors generally fall into two categories, those designed for making high speed dynamic measurements, and those designed for low speed, relatively static measurements. Examples of dynamic sensors include hydrophones, geophones, and acoustic velocity sensors, where the signal varies at a rate of 1 Hz and above. Examples of low speed

(static) sensors include temperature, hydrostatic pressure, and structural strain, where the rate of signal change may be on the order of seconds, minutes or hours. Many applications relate primarily to dynamic measurements of acceleration, acoustic velocity, and vibration using fiber optic sensors.

### SUMMARY OF THE INVENTION

In the present invention, an optical sensor module is proposed. The optical sensor module comprises two parts, including optical module and vibration sensing unit. The vibration sensing unit is disposed (attached/mounted) on the optical module. The optical module comprises a light source, a photo detector, and a second substrate with an optical micro-reflection surface. The vibration sensing unit comprises a first substrate, a membrane, and an optical gate. The membrane is disposed between the first substrate and the optical gate. A light source and at least one photo detector are disposed on (above) the second substrate. The optical sensor module may be a single optical sensor or an optical sensor array.

According to one aspect, the second substrate has optical micro-reflection surface, a concave bench, and guide pin for aligning. At least one light-guide layer is formed (filled) into the concave bench (trench) of the second substrate for guiding light. Material of the light-guide layer is polymer material or dielectric material. The membrane is a flexible thin film.

According to another aspect, the first substrate has an opening for exposing the membrane, and a first guide pin is formed under the membrane for aligning. A second guide pin is formed on the second substrate for supporting and aligning the first guide pin.

The light source is capable of emitting visible and invisible light. In one embodiment, at least one groove is formed on the concave structure of the second substrate. Based-on the at least one groove of the concave structure, optical component (cable) may be passively aligned to the at least one groove.

### BRIEF DESCRIPTION OF THE DRAWINGS

The components, characteristics and advantages of the present invention may be understood by the detailed descriptions of the preferred embodiments outlined in the specification and the drawings attached:
FIG. 1 illustrates an optical sensor module according to one embodiment of the invention;
FIG. 2 illustrates a structure of the optical sensor of the Fig.1;
FIG. 3 illustrates a structure of the optical sensor of the Fig.1;
FIG. 4 illustrates an optical sensor module according to one embodiment of the invention;
FIG. 5 illustrates a structure of the optical sensor of the Fig.1;
FIG. 6 illustrates an optical sensor module according to one embodiment of the invention;
FIG. 7 illustrates an optical sensor system according to another embodiment of the invention;
FIG. 8 illustrates an optical sensor system according to one embodiment of the invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

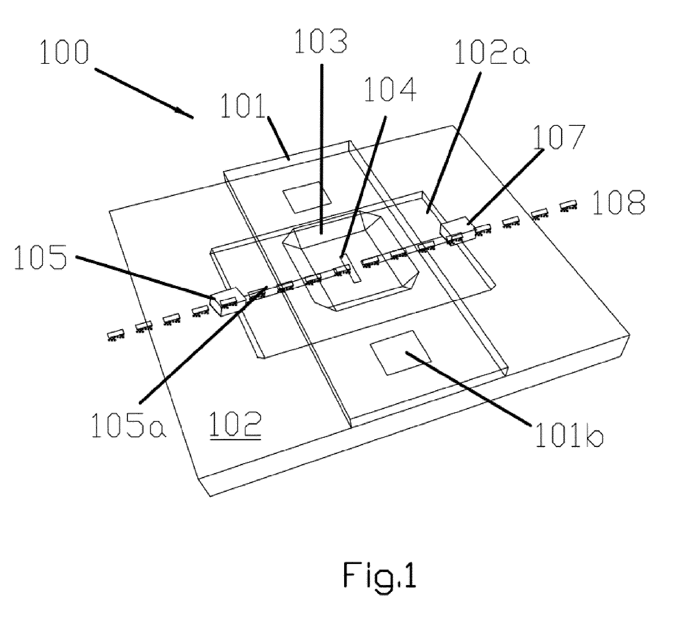

Fig. 1 shows an optical sensor module according to one embodiment of the present invention. The optical sensor module can be used as a vibration sensing element (device), which may be made by employing a standard semiconductor manufacturing process. Optical elements are applied to the vibration sensing element as sensing system. The sensing system can detect sound waves, mechanical waves, seismic waves and any vibrating wave energy via other mediums. In this embodiment, the optical sensor module 100 includes two parts, optical module and vibration sensing unit. The vibration sensing unit is disposed (attached/mounted) on the optical module. The optical module comprises a light source 105, a photo detector 107, a second substrate 102, a concave bench 102a, and a guide pin (not shown). The vibration sensing unit comprises a first substrate 101, a membrane 103, a guide pin 101b, and an optical gate 104. The membrane 103 is disposed between the first substrate 101 and the optical gate 104. The first substrate 101 is disposed (attached/mounted) on the membrane 103. The first substrate 101 has an opening 101a for exposing an area of the membrane 103. The optical gate 104 is formed (disposed) under (on) the membrane 103. The optical gate 104 locates under the opening 101a of the first substrate 101. In one embodiment, the optical gate 104 may be attached (pre-formed) or fixed on the membrane 103. The light source 105 and the photo detector 107 are disposed on (above) the second substrate 102. The light source 105 is capable of emitting visible and invisible light. The light source 105 is for example a laser, infrared light or a light emitting diode (LED). Infrared light is in infrared band, which can be emitted by laser or LED.

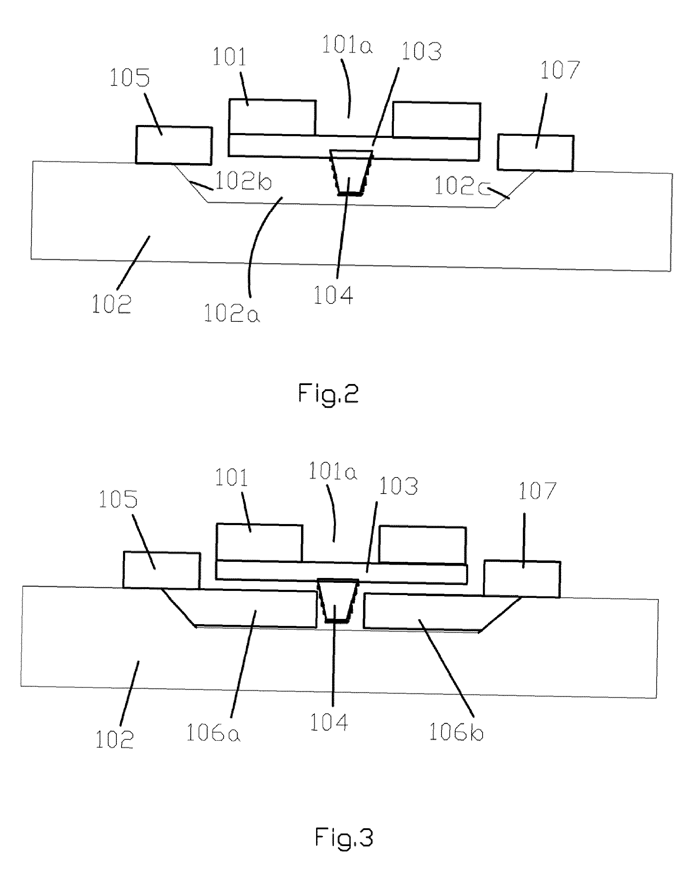

Fig. 2 shows a cross-sectional structure of the optical sensor module of the Fig.1, along a horizontal direction 108. The second substrate 102 is used to be as an optical bench, and has a concave bench 102a for facilitating the optical gate 104 to be disposed therein, and optical micro-reflection surface 102b, 102c having a specified angle (such as 45 degree angle or other degree angle). The optical gate 104 is disposed within the concave bench 102a. In one embodiment, size of the concave bench 102a is larger than size of the vibration sensing unit (first substrate 101, membrane 103 and optical gate 104). In one embodiment, the second substrate 102 has a first trench (concave structure) 102a in a specified depth beneath the top surface thereof. A first reflector is defined at a first end of the concave bench 102a in the second substrate 102, and a second reflector is defined at a second end of the concave bench 102a in the second substrate 102. The first end of the concave structure forms a first reflection surface, and the second end of the concave structure forms a second reflection surface. The concave bench 102a has a first slant plane 102b and a second slant plane 102c. In one embodiment, the optical bench (second substrate) 102 may include a first micro-reflection surface (first slant plane) 102b having a first specified angle (such as 45 degree angle or other degree angle) and a second micro-reflection surface (second slant plane) 102c having a second specified angle (such as 45 degree angle or other degree angle), wherein the micro-reflection surface 102b is opposite to the micro-reflection surface 102c. The concave bench 102a faces up.

For example, the light source 105 locates (attached) on top surface of the second substrate 102 (near the micro-reflection surface 102b) at left side, and the photo detector 107 locates (attached) on top surface of the second substrate 102 (near the micro-reflection surface 102c) of right side, respectively. Therefore, the optical path 105a (shown in Fig.1) of the light source 105 includes optical signal emitted by the light source 105 is reflected by the first reflection surface 102b of the second substrate 102 and then propagating to the optical gate 104, or reflected by the first reflection surface 102b of the second substrate 102 passing through the optical gate 104 and then propagating to the second reflection surface 102c of the second substrate 102.

The visible light or invisible light emitted by the light source 105 is propagating to the optical micro-reflector 102b of the second substrate 102 to reflect forward to the optical gate 104, followed by reflecting (or blocking) by the optical gate 104 or reflecting by the optical micro-reflector 102c of the second substrate 102 to be received by the photo detector 107.

As signal wave reaches to the membrane 103 of the optical sensor module (vibration sensing device) 100, the membrane 103 are vibrated by the signal wave. The optical gate 104 is then vibrated simultaneously because the optical gate 104 is attached on the membrane 103. For example, vibration of the membrane 103 and the optical gate 104 will move up and down together, and therefore light emitted by the light source 105 will be reflected (blocked) by the optical gate 104 or received by the photo detector 107. Thus, light intensity detected by the photo detector 107 is changed (increasingly) with the vibration of the optical gate 104. The intensity of light detected is converted into electrical signal output. Accordingly, function of vibration-detection can be achieved.

Based-on the sensing of the optical sensor module (vibration sensing device) 100, function of vibration-detection can be achieved. The vibration sensing device 100 is used to be as a vibration-detection component with vibration sensing function for detecting sound waves, mechanical waves, seismic waves ... and shock wave energy arisen by any other medium shocking. The vibration sensing device 100 integrates the light source 105, and the photo detector 107 therein to be as an optical sensing system. Thus, the present invention uses an optical sensing system as vibration-detection system.

Disposed location, number, height and size of the optical gate 104 depend on requirements for practical applications (various signal waves, detected sources). Material and thickness of the first substrate 101, the second substrate 102 and the membrane 103 may be selected, based-on requirements for practical applications (various signal waves, detected sources). For example, material of the first substrate 101 and the second substrate 102 is silicon. Therefore, the opening 101a and the concave bench (trench) 102a may be formed by a standard semiconductor process (photolithography process, etching process). For example, the membrane 103 is a flexible thin film.

Moreover, a light-guide layer 106a, 106b is formed (filled) into the concave bench (trench) 102a of the second substrate 102, shown in Fig.3. The optical gate 104 is disposed between the light-guide layer 106a and the light guide layer 106b. Material of the light-guide layer 106a, 106b includes polymer material, dielectric material. As signal wave reaches to the membrane 103 of the optical sensor module (vibration sensing device) 100, the membrane 103 and the optical gate 104 are vibrated together by the signal wave. Optical signal from the light-guide 106a to the light guide 106b is influenced by the vibration of the optical gate 104. Thus, light intensity detected by the photo detector 107 is changed (increasingly) with the vibration of the optical gate 104. The intensity of light detected is converted into electrical signal output. Accordingly, vibration-detection for signal wave can be achieved.

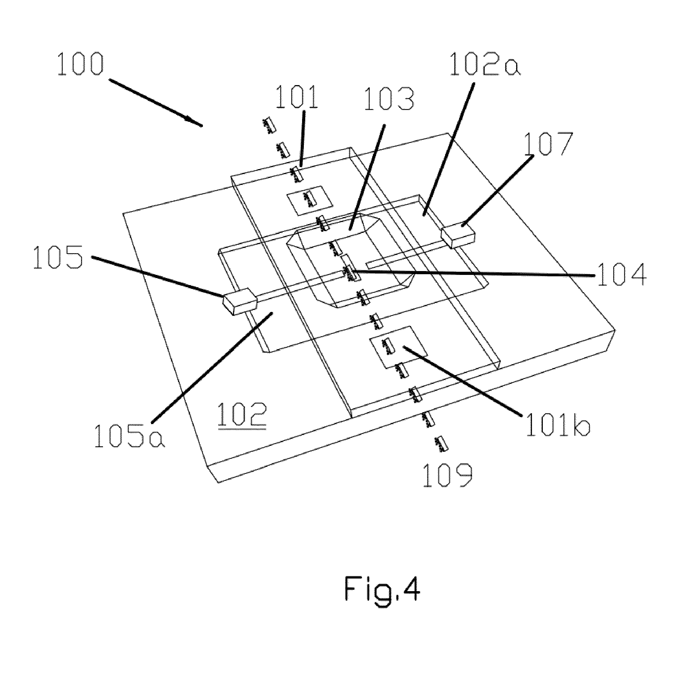

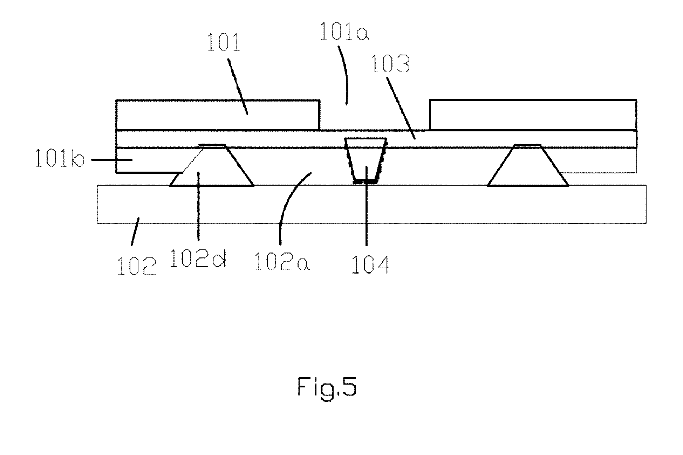

Fig. 4 shows a cross-sectional structure of the optical sensor module of the Fig.1, along a vertical direction 109. The guide pin 101b and the guide pin 102d are used to be as an alignment baseline, shown in Fig.5. Thus, the vibration sensing unit is disposed (attached/mounted) on the optical module by aligning the guide pin 101b to the guide pin 102d of the second substrate 102. The guide pin 102d is slant bump with a first contact slant. The guide pin 101b has a second contact slant. Angle of the second contact slant of the guide pin 101b is substantially the same as the first contact slant of the slant bump 102d. After aligning, the total height (vertical) of the guide pin 101b and the guide pin 102d is larger than thickness (vertical) of the optical gate 104. Thus, top and bottom position of the optical gate 104 depends on the total height (vertical) of the guide pin 101b and the guide pin 102d when assembled. The guide pin 101b is disposed on the guide pin 102d in contact slant's direction. In one embodiment, guide pin 101b is attached on the guide pin 102d by glue. For example, the guide pin 101b is a part of the first substrate 101, or a single component. And, the guide pin 102d is a part of the second substrate 102, or an independent component. The guide pin 101b is attached under (on) the membrane 103. The guide pin 101b and the guide pin 102d may be formed by a standard semiconductor process (photolithography process, etching process). In another embodiment, the membrane 103 is disposed (attached) on the second substrate 102 by glue or metal bond without the above-mentioned guide pins (101b, 102d) for alignment.

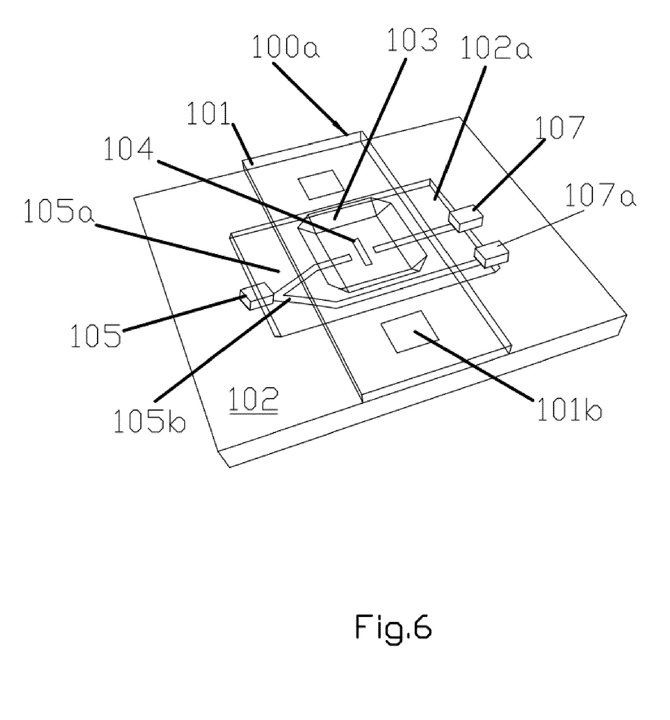

Fig. 6 shows an optical sensor module according to one embodiment of the present invention. In this embodiment, the optical path of the light source 105 is split into two optical paths created by an optical splitter, optical path 105a and optical path 105b. The optical sensor module 100a comprises photo detector 107, 107a. The optical path 105a is passing through the optical gate 104 to the photo detector 107, the same as the Fig.1. Another optical path 105b is without passing through the optical gate 104, and reaching to the photo detector 107a. The two optical signals of the optical path 105a and the optical path 105b can be compared with each other, and further performing numerical analysis to improve accuracy.

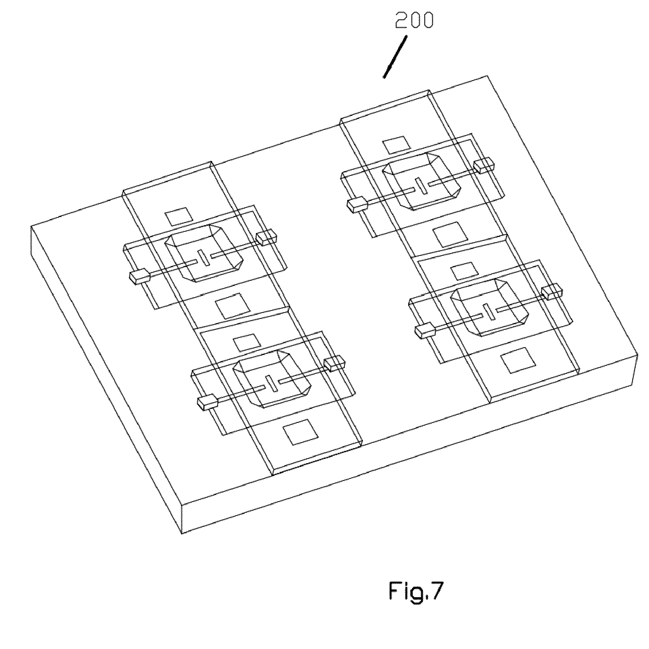

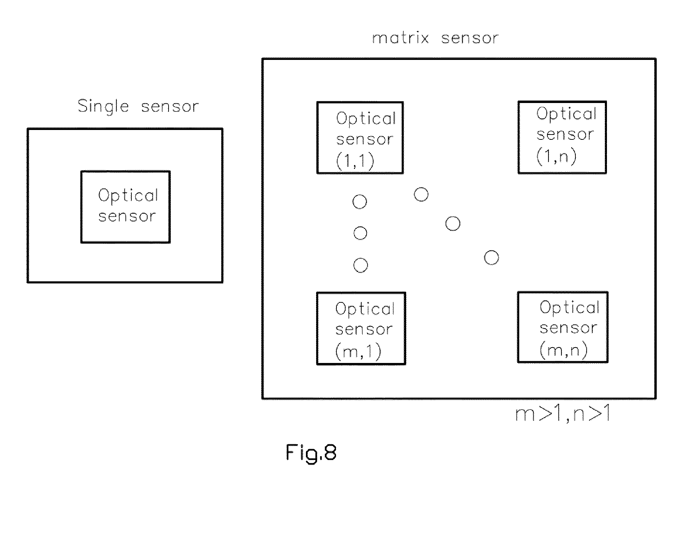

Fig. 7 shows an optical sensor system according to another embodiment of the present invention. In this embodiment, the optical sensor system 200 comprises 2x2 array optical sensor module 100. Therefore, performance of vibration-detection for signal wave outside can be enhanced. In another embodiment, the optical sensor may be a single optical sensor or an optical sensor array (matrix sensor), shown in Fig.8. The matrix sensor is constructed by m x n matrix optical sensors, wherein number of m and n are integer larger than one.

It will be understood that the above descriptions of embodiments are given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. An optical sensor module, which characterizes in that comprises:
a membrane;
a first substrate with an opening for exposing an area of said membrane, wherein said first substrate is disposed on said membrane; and
an optical gate disposed under said membrane.

2. The optical sensor module of claim 1, wherein a material of said first substrate is silicon.

3. The optical sensor module of claim 1, wherein said membrane is a flexible thin film.

4. The optical sensor module of claim 1, further comprising a second substrate with a concave structure having a first optical micro-reflection surface and a second optical micro-reflection surface formed thereon, wherein said optical gate is disposed within said concave structure.

5. The optical sensor module of claim 4, wherein said membrane is disposed on said second substrate by a glue or a metal bond.

6. The optical sensor module of claim 4, wherein said membrane is a flexible thin film.

7. The optical sensor module of claim 4, further comprising a light-guide layer disposed into said concave structure.

8. The optical sensor module of claim 7, wherein material of said light-guide layer is polymer material or dielectric material.

9. The optical sensor module of claim 4, further comprising a first guide pin formed under said membrane.

10. The optical sensor module of claim 9, further comprising a second guide pin formed on said second substrate.

11. The optical sensor module of claim 10, wherein said first guide pin is attached on said second guide pin by a glue.

12. The optical sensor module of claim 4, further comprising a light source disposed on said second substrate.

13. The optical sensor module of claim 12, further comprising a photo detector disposed on said second substrate.

14. The optical sensor module of claim 4, further comprising an optical splitter.

15. The optical sensor module of claim 14, further comprising a second photo detector disposed on said second substrate.
